# EUROPÄISCHE PATENTSCHRIFT

(11) **EP 2 254 402 B1**
(45) Veröffentlichungstag und Bekanntmachung des Hinweises auf die Patenterteilung: **01.08.2012**
(21) Anmeldenummer: 09712122.2
(22) Anmeldetag: 17.02.2009
(51) Int. Cl.: A01G 23/093

(54) **FAHRZEUG ZUR ERNTE DÜNNER, STÄNGELIGER HOLZGEWÄCHSE**
VEHICLE FOR HARVESTING THIN, STEMMED WOODY PLANTS
VÉHICULE POUR RÉCOLTER DES PLANTES LIGNEUSES MINCES SUR TIGE

(30) Priorität: 24.02.2008 DE 102008010735
(43) Veröffentlichungstag der Anmeldung: 01.12.2010
(73) Patentinhaber: Viessmann Werke GmbH & Co. KG, 35107 Allendorf (DE)
(72) Erfinder: DOEHRER, Karl, 34474 Diemelstadt (DE)
(74) Vertreter: Wolf, Michael
(86) Internationale Anmeldenummer: PCT/DE2009/000205
(87) Internationale Veröffentlichungsnummer: WO 2009/103269

(56) Entgegenhaltungen:
- WO-A-92/14350
- WO-A-2008/141671
- DE-A1- 2 322 136
- DE-A1-102005 049 716
- FR-A- 2 293 870
- US-A- 4 232 719

## Beschreibung

Die Erfindung betrifft ein Fahrzeug zur Ernte dünner, stängeliger Holzgewächse gemäß dem Oberbegriff des Patentanspruchs 1.

Ein Fahrzeug im Sinne des Oberbegriffs des Patentanspruchs 1 ist aus der DE 23 22 136 A1 bekannt.

Ein gattungsgemäßes Fahrzeug ist außerdem aus der DE 692 06 402 T2 bekannt. Dieses besteht aus einer Sägeeinrichtung, einer Fördereinrichtung und einer Bündeleinrichtung. Die Sägeeinrichtung ist dabei in Fahrtrichtung gesehen dem Fahrzeug vorangestellt und weist kurz über Bodenhöhe ein Schneidelement zum Abschneiden der Holzgewächse auf. Die Maßgabe "kurz über Bodenhöhe" bringt dabei (und auch weiter unten) zum Ausdruck, dass das Schneidelement etwa zwischen 0 cm und 15 cm oberhalb des Bodens entlang geführt ist, um die Holzgewächse möglichst vollständig zu ernten. Die erwähnte Fördereinrichtung ist zum Zuführen mit der Sägeeinrichtung abgeschnittener Holzgewächse zur Bündeleinrichtung ausgebildet, und zwar derart, dass so genannte, an einem Förderband befestigte Mitnehmerstifte die Holzgewächse erfassen und zur Bündeleinrichtung führen. Letztgenannte ist mit Distanz über Bodenhöhe angeordnet, wobei die Maßgabe "mit Distanz über Bodenhöhe" zum Ausdruck bringt, dass zwischen dem Boden (auf dem die Hölzer wachsen) und der Bündeleinrichtung mindestens ein Abstand von 50 cm besteht, was dadurch bedingt ist, dass die Bündeleinrichtung oberhalb der Fahrzeugräder positioniert ist.

Bei der Lösung nach der DE 692 06 402 T2 werden die Holzgewächse abgeschnitten, mit Hilfe der Fördereinrichtung etwa in der Mitte geknickt und dann einer als Trichter ausgebildeten Bündeleinrichtung zugeführt. Zur Effizienzsteigerung sind jeweils zwei Sägeeinrichtungen, Fördereinrichtungen und Bündeleinrichtungen vorgesehen, und zwar links und rechts des als Traktor ausgebildeten Fahrzeugs.

Der Erfindung liegt die Aufgabe zugrunde ein Fahrzeug der eingangs genannten Art zu verbessern.

Diese Aufgabe ist mit einem Fahrzeug der eingangs genannten Art durch die im Kennzeichen des Patentanspruchs 1 aufgeführten Merkmale gelöst.

Nach der Erfindung ist also vorgesehen, dass seitlich neben dem genau einen Sägeblatt eine Leiteinrichtung zur Zuführung der abgeschnittenen Holzgewächse zur genau einen Förderschnecke angeordnet ist.

Mit anderen Worten ausgedrückt, wird erfindungsgemäß von den weit nach vorne auskragenden Förderbänderpaaren und dem Durchbrechen der Holzgewächse Abstand genonmen; stattdessen erfolgt die Zuführung der Holzgewächse (zum Beispiel dünne Pappeln) zur Bündeleinrichtung mit Hilfe einer typischerweise eine vertikal ausgerichtete Drehachse aufweisenden Förderschnecke, die die Holzgewächse an ihrer Schnittkante kurz nach dem Abschneiden erfasst und zur höhergelegenen Bündeleinrichtung fördert. Unter "höher gelegen" ist dabei zu verstehen, dass die Holzgewächse vor der Zuführung zur Bündeleinrichtung ein deutliches Stück (mindestens 30 cm, typischerweise eher 100 cm und mehr) angehoben werden (müssen).

Als Förderschnecke bezeichnet man dabei (gemäß Wikipedia) eine Welle, um die ein oder mehrere schneckenförmig gewundene Gänge in Form vcn flachen Blechen, Gummilappen oder auch Holzschnitzereien gewendelt sind. Im vorliegenden, erfindungsgemäßen Fall sind die gewundenen Gänge vorzugsweise aus flachen Blechen gebildet, die stabil genug sind, eine entsprechende Förderkraft auf die Schnittkanten der Holzgewächse aufzubringen.

Alternativ kann auf dem Fahrzeug statt der Bündeleinrichtung (siehe DE 692 06 402 T2) auch eine so genannte Hackereinrichtung vorgesehen sein, mittels derer das geerntete Holz direkt klein gehäckselt wird. Dies kommt im Oberbegriff des Patentanspruchs 1 durch die Formulierung "wahlweise eine Bündel- oder Hackereinrichtung" zum Ausdruck.

Andere vorteilhafte Weiterbildungen des erfindungsgemäßen Fahrzeugs ergeben sich aus den abhängigen Patentansprüchen.

Der Vollständigkeit halber wird noch auf die DE 10 2005 049 716 B4 hingewiesen. Bei dieser Lösung dienen die beiden dem Fahrzeug vorangestellten Förderschnecke aber dazu, die Baum-Stämmchen nach unten in die Häckselschnecke zu drücken.

Das erfindungsgemäße Fahrzeug einschließlich seiner vorteilhaften Weiterbildungen gemäß der abhängigen Patentansprüche wird nachfolgend anhand der zeichnerischen Darstellung eines bevorzugten Ausführungsbeispiels näher erläutert.

Es zeigt (die verwendeten Bezugszeichen gelten durchgehend für alle Figuren)
- Figur 1: in Seitenansicht das erfindungsgemäße Fahrzeug in einer ersten Ernteposition;
- Figur 2: in Seitenansicht das Fahrzeug gemäß Figur 1 in einer zweiten Ernteposition;
- Figur 3: in Draufsicht das erfindungsgemäße Fahrzeug im Leerzustand (also ohne Holzgewächse), und
- Figur 4: in Draufsicht das Fahrzeug gemäß Figur 3 beim Ernten.

Zunächst einmal ist allen beliebigen Ausführungsformen des erfindungsgemäßen Fahrzeugs zur Ernte dünner, stängeliger Holzgewächse gemein, dass sie eine Sägeeinrichtung 1, eine Fördereinrichtung 2 und wahlweise eine Bündel- oder Hackereinrichtung 3 aufweisen. Wie eingangs erwähnt, wird das geerntete Hclz wahlweise einfach gebündelt oder direkt gehäckselt. In den Figuren ist dabei stets eine Bündeleinrichtung dargestellt. Entsprechende Häcksler sind aber allgemein bekannt und bedürfen insofern keiner näheren Erläuterung.

Beim erfindungsgemäßen Fahrzeug ist die Sägeeinrichtung 1 in Fahrtrichtung gesehen dem Fahrzeug vorangestellt und weist kurz über Bodenhöhe ein Schneidelement 4 zum Abschneiden der Holzgewächse auf. Dabei ist ferner die Fördereinrichtung 2 zum Zuführen mit der Sägeeinrichtung 1 abgeschnittener Holzgewächse zur Bündeleinrichtung 3 ausgebildet und die Bündeleinrichtung 3 (bzw. die Hackereinrichtung) ist mit Distanz über Bodenhöhe angeordnet. Außerdem ist die Bündeleinrichtung 3 auf dem Fahrzeug in Fahrtrichtung hinter der Fördereinrichtung 2 angeordnet.

Wesentlich für das erfindungsgemäße Fahrzeug ist nun, dass die Fördereinrichtung 2 eine die Holzgewächse an ihrer Schnittkante erfassende und zur Bündeleinrichtung 3 anhebende Förderschnecke 5 mit vorzugsweise im wesentlichen vertikal ausgerichteter Drehachse 14 aufweist. Die Förderschnecke 5 hat dabei einen kleineren Durchmesser, vorzugsweise zwischen 0,3 m und 0,5 m, als das Sägeblatt 6, worauf weiter unten noch eingegangen wird.

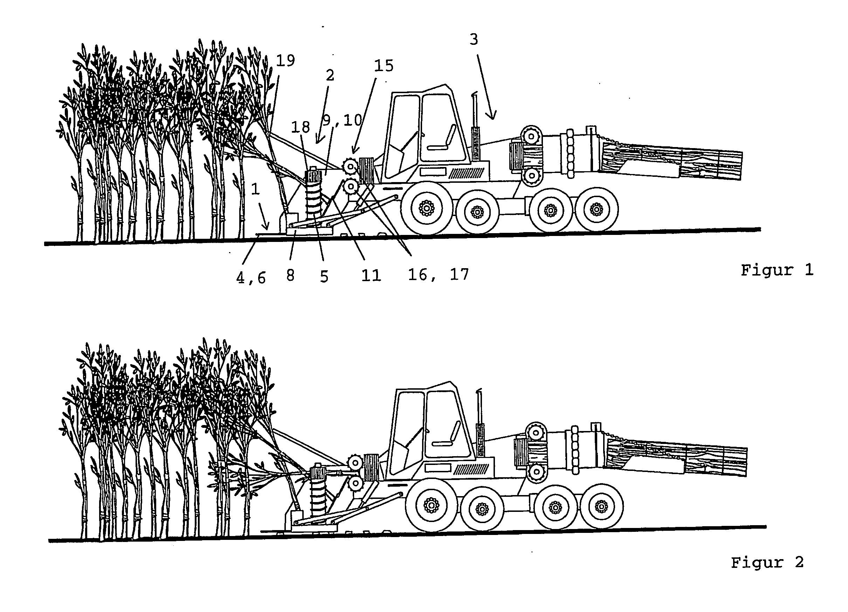

Wie insbesondere aus den Figuren 1 und 2 ersichtlich, weist die Sägeeinrichtung 1 ein kreisförmiges Sägeblatt 6 auf, das mit seiner Haupterstreckungsebene parallel zum Boden angeordnet ist. Damit abgeschnittene Holzgewächse in jedem Fall zur Förderschnecke 5 gelangen, ist ferner auf der bodenabgewandten Oberfläche des Sägeblatts 6 mindestens ein (wie ersichtlich hier etwa zehn) mit Schnittkanten des abgeschnittenen Holzgewächses zusammenwirkendes Mitnehmerelement 7 angeordnet. Bei diesem Mitnehmerelement 7 handelt es sich im Prinzip um eine schmale, auf dem Sägeblatt befestigte Leiste, die das Hclzgewächs erfasst und beim Drehen mitnimmt.

Das Fahrzeug bzw. die Sägeeinrichtung 1 funktioniert dann besonders gut, wenn das Sägeblatt 6 einen Durchmesser von mindestens 0,5 m, vorzugsweise (wie dargestellt) mehr als 1,0 m aufweist, wobei die Sägeeinrichtung 1 an einem höhenverstellbaren Ausleger 8 am Fahrzeug angeordnet ist. Diese Höhenverstellung erfolgt dabei in an sich bekannter Weise mit einer Sensoreinrichzung, die die Sägeeinrichtung 1 stets (also auch Bodenunebenheiten ausgleichend) in einer gewünschten, voreingestellten Höhe über dem Boden hält.

Neben den bereits erwähnten Mitnehmerelementen 7 ist weiterhin zur sicheren Zuführung des Holzgewächses zur Förderschnecke 5 vorgesehen, dass seitlich neben dem Sägeblatt 6 eine Leiteinrichtung 9 angeordnet ist. Dabei ist diese Leiteinrichtung 9 aus einer senkrechten, am Rand des Sägeblatts 6 angeordneten, ersten Leitplatte 10 (Blech) und aus einer in Fahrtrichtung gesehen schräg von unten nach oben verlaufenden, hinter der Förderschnecke 5 angeordneten, zweiten Leitplatte 11 gebildet. Diese zweite Leitplatte 11 ist dabei vorzugsweise (wie dargestellt) teleskopierbar, um bei Bodenunebenheiten oder auch beim Hochklappen der Säge- und Fördereinrichtung 1, 2 entsprechend verstellbar zu sein.

Ebenfalls zur Gewährleistung einer sicheren Zuführung der Holzgewächse zur Förderschnecke 5 ist das Sägeblatt 5 auf seiner bodenabgewandten Seite mit einer Zeilabdeckung 12 versehen, die einerseits den in Fahrtrichtung gesehen vorderen Teil des Sägeblatts freigestellt und andererseits für das Holzgewächs eine trichterförmige Zuführung 13 zur Förderschnecke 5 bildet.

Um die mit der Förderschnecke 5 angehobenen Holzgewächse der Bündeleinrichtung 3 zuführen zu können, ist in Fahrtrichtung hinter der Förderschnecke 5 eine horizontal ausgerichtete Wal zeneinrichtung 15 angeordnet, die ihrerseits aus zwei, zueinander verstellbaren, die abgeschnittenen Holzgewächse zusammenpressenden Walzen 16, 17 (so genannte Stachelwalzen) gebildet ist. Wie aus den Figuren ersichtlich, ist dabei die Walzeneinrichtung 15 in Fahrtrichtung gesehen hinter der Leiteinrichtung 9 angeordnet.

Wie insbesondere aus den Figuren 1 und 2 ersichtlich, ist weiterhin am bodenabgewandten Ende der Förderschnecke 5 eine die abgeschnittenen Holzgewächse zur Walzeneinrichtung 15 leitende Förderwalze 18 angeordnet.

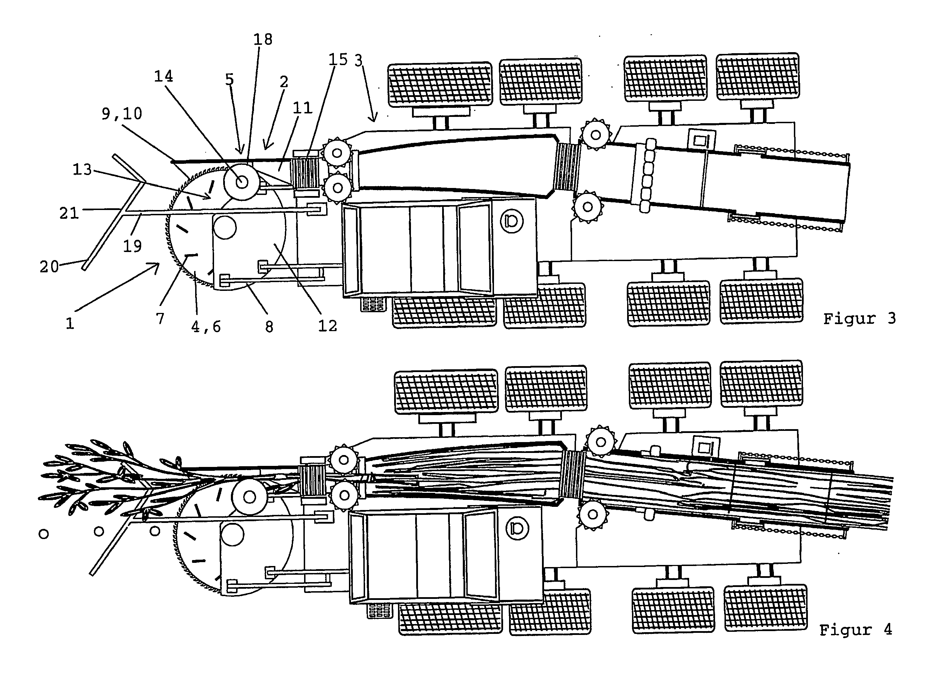

Da die Holzgewächse insbesondere nach dem Abschneiden auch im oberen Bereich eine sichere Rührung benötigen, ist oberhalb der Fördereinrichtung 2 ein Leitgestell 19 mit einem dem Fahrzeug vorangestellten freien Ende 20 und einem Gleitbereich 21 vorgesehen, wobei (siehe hierzu Figur 4) bei in Reihe stehenden Holzgewächsen das freie Ende 20 des Leitgestells 19 auf einer Seite der Reihe und die Förderschnecke 5 auf der anderen Seite der Reihe angeordnet ist, wobei der Gleitbereich 21 bei Vorwärtsbewegung des Fahrzeugs bodenentfernte Bereiche der Holzgewächse von der einen zur anderen Seite führend und nach vorne biegend ausgebildet ist.

Nicht extra dargestellt, aber auch vorgesehen ist, dass die Förderschnecke 5 mindestens zwei unterschiedliche Durchmesser aufweiset, nämlich einen kleineren nahe dem Sägeblatt 6 und einen größeren im oberen Bereich. Die erfassten und mit ihrem unteren Teil angehobenen Stämmchen können dank dieser Konstruktion Platz für nachfolgende Stämmchen machen.

Das erfindungsgemäße Fahrzeug funktioniert wie folgt:
Mit dem Sägeblatt 6 wird ein Bäumchen nach dem anderen kurz über dem Boden abgeschnitten, wobei gleichzeitig das Leitgestell 19 dafür sorgt, dass die Bäumchen nach vorne gebogen bzw.
gedrückt werden. Der frisch geschnittene Stammfuß eines Bäumchens wandert dann auf den Sägeblatt 6 entlang (gegebenenfalls vom Mitnehmerelement 7 gezwungen) in Richtung Förderschnecke 5.
Dort angekommen, wird das Stammfüßchen von dieser erfasst und
aufgrund der Drehbewegung angehoben. Dabei rutscht der Stamm bzw, der Fuß des Bäumchens einerseits an der ersten, senkrechten Leitplatte 10 und andererseits an der zweiten, schrägen Leitplatze 11 entlang nach oben zur Walzeneinrichtung 15.
Sobald das Stammfüßchen dort angekommen ist, wird es von den Stackelwalzen 16, 17 erfasst und das gesammte Bäumchen der Bündeleinrichtung 3 zugeführt. - Wie ersichtlich, ergibt sich durch diese erfindungsgemäße Lösung ein Fahrzeug, mit dem Plantagen von Holzgewächsen kontinuierlich geerntet werden können,
wobei auf dem Fahrzeug wahlweise Bündel erzeugt werden (bevorzugt) oder einfach ein Häcksler entsprechendes Holzhäcksel produziert.

### Bezugszeichenliste

- 1: Sägeeinrichtung
- 2: Fördereinrichtung
- 3: Bündeleinrichtung
- 4: Schneidelement
- 5: Förderschnecke
- 6: Sägeblatt
- 7: Mitnehmerelement
- 8: Ausleger
- 9: Leiteinrichtung
- 10: erste Leitplatte
- 11: zweite Leitplatte
- 12: Teilabdeckung
- 13: Zuführung
- 14: Drehachse
- 15: Walzeneinrichtung
- 16: Walze
- 17: Walze
- 18: Förderwalze
- 19: Leitgestell
- 20: freies Ende des Leitgestells
- 21: Gleitbereich

## Patentansprüche

1. Fahrzeug zur Ernte dünner, stängeliger Holzgewächse, umfassend eine Sägeeinrichtung (1), eine Fördereinrichtung (2) und wahlweise eine Bündel- oder Hackereinrichtung (3), wobei die Sägeeinrichtung (1) in Fahrtrichtung gesehen dem Fahrzeug vorangestellt ist und kurz über Bodenhöhe ein als kreisförmiges Sägeblatt (6) ausgebildetes Schneidelement (4) zum Abschneiden der Holzgewächse aufweist,
wobei die Fördereinrichtung (2) zum Zuführen mit der Sägeeinrichtung (1) abgeschnittener Holzgewächse zur Bündel- oder Hackereinrichtung (3) ausgebildet ist und
wobei die Bündel- oder Hackereinrichtung (3) mit Distanz über Bodenhöhe angeordnet ist, wobei die Fördereinrichtung (2) eine die Holzgewächse an ihrer Schnittkante erfassende und zur Bündel- oder Hackereinrichtung (3) anhebende Förderschnecke (5) aufweist,
**dadurch gekennzeichnet,**
**dass** seitlich neben dem genau einen Sägeblatt (6) eine Leiteinrichtung (9) zur Zuführung der abgeschnittenen Folzgewächse zur genau einen Förderschnecke (5) angeordnet ist.

2. Fahrzeug nach Ansprach 1,
**dadurch gekennzeichnet,**
**dass** das Sägeblatt (6) mit seiner Haupterstreckungsebene parallel zum Boden angeordnet ist.

3. Fahrzeug nach Anspruch 1 oder 2,
**dadurch gekennzeichnet,**
**dass** auf einer bodenabgewandten Oberfläche des Sägeblatts (6) mindestens ein mit Schnittkanten des abgeschnittenen Holzgewächses zusammenwirkendes Mitnehmerelement (7) angeordnet ist.

4. Fahrzeug nach einem der Ansprüche 1 bis 3,
**dadurch gekennzeichnet,**
**dass** das Sägeblatt (6) einen Durchmesser von mindestens 0,5 m, vorzugsweise mehr als 1,0 m aufweist.

5. Fahrzeug nach einem der Ansprüche 1 bis 4,
**dadurch gekennzeichnet,**
**dass** die Sägeeinrichtung (1) an einem vorzugsweise höhenverstellbaren Ausleger (8) am Fahrzeug angeordnet ist.

6. Fahrzeug nach einem der Ansprüche 1 bis 5,
**dadurch gekennzeichnet,**
**dass** die Leiteinrichtung (9) aus einer senkrechten, am. Rand des Sägeblatts (6) angeordneten, ersten Leitplatte (10) und aus einer in Fahrtrichtung gesehen schräg von unten nach oben verlaufenden, hinter der Förderschnecke (5) angeordneten, zweiten Leitplatte (11) gebildet ist.

7. Fahrzeug nach einem der Ansprüche 1 bis 6,
**dadurch gekennzeichnet,**
**dass** das Sägeblatt (6) auf seiner bodenabgewandten Seite mit einer Teilabdeckung (12) versehen ist, wobei die Teilabdeckung (12) vorzugsweise einerseits den in Fahrtrichtung gesehen vorderen Teil des Sägeblatts freigestellt und andererseits für das Holzgewächs eine trichterförmige Zuführung (13) zur Förderschnecke (5) bildet.

8. Fahrzeug nach einem der Ansprüche 1 bis 7,
**dadurch gekennzeichnet,**
**dass** die Förderschnecke (5) eine vertikal ausgerichtete Drehachse (14) aufweist.

9. Fahrzeug nach einem der Ansprüche 1 bis 8,
**dadurch gekennzeichnet,**
**dass** die Förderschnecke (5) einen kleineren Durchmesser, vorzugsweise zwischen 0,3 m und 0,5 m, als das Sägeblatt (6) aufweist.

10. Fahrzeug nach einem der Ansprüche 1 bis 9,
**dadurch gekennzeichnet,**
**dass** die Förderschnecke (5) mindestens zwei unterschiedliche Durchmesser aufweist, nämlich einen kleineren nahe dem Sägeblatt und einen größeren im oberen Bereich.

11. Fahrzeug nach einem der Ansprüche 1 bis 10,
**dadurch gekennzeichnet,**
**dass** in Fahrtrichtung hinter der Förderschnecke (5) eine horizontal ausgerichtete Walzeneinrichtung (15) angeordnet ist, die vorzugsweise aus zwei, zueinander verstellbaren, die abgeschnittenen Holzgewächse zusammenpressenden Walzen (16, 17) gebildet ist, wobei die Walzeneinrichtung (15) in Fahrtrichtung gesehen vorzugsweise hinter der Leiteinrichtung (9) angeordnet ist.

12. Fahrzeug nach einem der Ansprüche 1 bis 11,
**dadurch gekennzeichnet,**
**dass** am bodenabgewandten Ende der Förderschnecke (5) eine die abgeschnittenen Holzgewächse vorzugsweise zur Walzeneinrichtung (15) leitende Förderwalze (18) angeordnet ist.

13. Fahrzeug nach einem der Ansprüche 1 bis 12,
**dadurch gekennzeichnet,**
**dass** oberhalb der Fördereinrichtung (2) ein Leitgestell (19) mit einem dem Fahrzeug vorangestellten freien Ende (20) und einem Gleitbereich (21) vorgesehen ist, wobei bei in Reihe stehenden Holzgewächsen vorzugsweise das freie Ende (20) des Leitgestells (19) auf einer Seite der Reihe und die Förderschnecke (5) auf der anderen Seite der Reihe angeordnet ist, wobei der Gleitbereich (21) bei vorwärtsbewegung des Fahrzeugs bodenentfernte Bereiche der Holzgewächse von der einen zur anderen Seite führend und nach vorne biegend ausgebildet ist.

14. Fahrzeug nach einem der Ansprüche 1 bis 13,
**dadurch gekennzeichnet,**
**dass** die Bündel- oder Hackereinrichtung (3) auf dem Fahrzeug in Fahrtrichtung hinter der Fördereinrichtung (2) angeordnet ist.

## Claims

1. A vehicle for harvesting thin, stalky woody plants, comprising a sawing device (1), a conveying device (2) and either a baling or chopping device (3),
wherein the sawing device (1) is placed ahead of the vehicle as seen in the direction of travel and has a cutting element (4) formed as a circular saw blade (6) just above ground height for cutting the woody plants, wherein the conveying device (2) is formed to feed woody plants cut with the sawing device (1) to the baling or chopping device (3) and
wherein the baling or chopping device (3) is arranged at a distance above ground height, wherein the conveying device (2) has a screw conveyor (5) which grips the woody plants by the cut edge thereof and lifts them to the baling or chopping device (3),
**characterised in that**
a guiding device (9) for feeding the cut woody plants to the exactly one screw conveyor (5) is arranged laterally next to the exactly one saw blade (6).

2. The vehicle according to Claim 1,
**characterised in that**
the saw blade (6) is arranged with its main extension plane parallel to the ground.

3. The vehicle according to Claim 1 or 2,
**characterised in that**
at least one driver element (7) which interacts with cut edges of the cut woody plants is arranged on a surface of the saw blade (6) facing away from the ground.

4. The vehicle according to one of Claims 1 to 3,
**characterised in that**
the saw blade (6) has a diameter of at least 0.5 m, preferably more than 1.0 m.

5. The vehicle according to one of Claims 1 to 4,
**characterised in that** the saw device (1) is arranged on the vehicle on a preferably height-adjustable arm (8).

6. The vehicle according to one of Claims 1 to 5,
**characterised in that** the guiding device (9) is formed from a perpendicular first guide plate (10), which is arranged on the edge of the saw blade (6), and a second guide plate (11), which runs obliquely upwards as seen in the direction of travel and is arranged behind the screw conveyor (5).

7. The vehicle according to one of Claims 1 to 6,
**characterised in that** the saw blade (6) is provided with a partial cover (12) on its side facing away from the ground, wherein the partial cover (12) preferably exposes the front part of the saw blade as seen in the direction of travel on one side and forms a funnel-shaped feed (13) to the screw conveyor (5) for the woody plants on the other side.

8. The vehicle according to one of Claims 1 to 7,
**characterised in that** the screw conveyor (5) has a vertically aligned rotation axis (14).

9. The vehicle according to one of Claims 1 to 8,
**characterised in that** the screw conveyor (5) has a smaller diameter, preferably between 0.3 m and 0.5 m, than the saw blade (6).

10. The vehicle according to one of Claims 1 to 9,
**characterised in that** the screw conveyor (5) has at least two different diameters, namely a smaller one near the saw blade and a larger one in the upper region.

11. The vehicle according to one of Claims 1 to 10,
**characterised in that** a horizontally aligned rolling device (15) is arranged behind the screw conveyor (5) in the direction of travel, which rolling device is preferably formed from two rollers (16, 17) which can be adjusted with respect to each other and compress the cut woody plants, wherein the rolling device (15) is arranged preferably behind the guiding device (9) as seen in the direction of travel.

12. The vehicle according to one of Claims 1 to 11,
**characterised in that** a conveyor roller (18) which guides the cut woody plants preferably to the rolling device (15) is arranged on the end of the screw conveyor (5) which faces away from the ground.

13. The vehicle according to one of Claims 1 to 12,
**characterised in that** a guide frame (19) having a free end (20) ahead of the vehicle and a sliding region (21) is provided above the conveying device (2), wherein, when the woody plants are standing in rows, the free end (20) of the guide frame (19) is preferably arranged on one side of the row and the screw conveyor (5) is arranged on the other side of the row, wherein the sliding region (21) is formed to guide regions of the woody plants which are remote from the ground from one side to the other and bend them forwards as the vehicle moves forwards.

14. The vehicle according to one of Claims 1 to 13,
**characterised in that** the baling or chopping device (3) is arranged on the vehicle behind the conveying device (2) in the direction of travel.

## Revendications

1. Véhicule destiné à récolter des végétaux à base de bois minces et en forme de tige, comprenant un dispositif de sciage (1), un dispositif de transport (2) et en option un dispositif de regroupement ou de hachage (3),
le dispositif de sciage (1) étant placé en avant, vu dans le sens de marche du véhicule, et présentant juste au-dessus du niveau du sol un élément de coupe (4) conçu comme une lame de scie (6) circulaire pour la découpe des végétaux à base de bois,
le dispositif de transport (2) étant conçu pour l'amenée avec le dispositif de sciage (1) de végétaux à base de bois découpés au dispositif de regroupement ou de broyage (3) et
le dispositif de regroupement ou de hachage (3) étant disposé à distance au-dessus du niveau du sol, le système de transport (2) présentant une vis sans fin de transport (5) détectant les végétaux à base de bois sur leur arête de coupe et les soulevant jusqu'au dispositif de regroupement ou de hachage (3), **caractérisé en ce**
**qu'**un dispositif directeur (9) destiné à amener les végétaux à base de bois découpés à exactement une vis sans fin (5) est disposé latéralement à côté de la exactement une lame de scie (6).

2. Véhicule selon la revendication 1,
**caractérisé en ce que**
la lame de scie (6) est disposée avec son plan d'extension principale parallèlement au sol.

3. Véhicule selon la revendication 1 ou 2,
**caractérisé en ce**
**qu'**au moins un élément entraîneur (7) coopérant avec des arêtes de coupe des végétaux à base de bois découpés est disposé sur une surface, opposée au sol, de la lame de scie (6).

4. Véhicule selon l'une des revendications 1 à 3,
**caractérisé en ce que**
la lame de scie (6) présente un diamètre d'au moins 0,5 m, de préférence supérieur à 1,0 m.

5. Véhicule selon l'une des revendications 1 à 4,
**caractérisé en ce que**
le dispositif de sciage (1) est disposé sur une flèche (8) de préférence réglable en hauteur sur le véhicule.

6. Véhicule selon l'une des revendications 1 à 5,
**caractérisé en ce que**
le dispositif directeur (9) est formé d'une première plaque directrice (10) verticale, disposée sur le bord de la lame de scie (6), et d'une seconde plaque directrice (11) agencée en biais, vue dans le sens de marche, du bas vers le haut et disposée derrière la vis sans fin de transport (5).

7. Véhicule selon l'une des revendications 1 à 6,
**caractérisé en ce que**
la lame de scie (6) est dotée sur son côté opposé au sol d'un revêtement partiel (12), le revêtement partiel (12) formant de préférence d'une part la partie avant, vue dans le sens de marche, de la lame de scie et formant d'autre part pour les végétaux à base de bois une arrivée (13) en forme d'entonnoir pour la vis sans fin de transport (5).

8. Véhicule selon l'une des revendications 1 à 7,
**caractérisé en ce que**
la vis sans fin de transport (5) présente un axe de rotation (14) orienté verticalement.

9. Véhicule selon l'une des revendications 1 à 8,
**caractérisé en ce que**
la vis sans fin (5) présente un diamètre plus petit, de préférence compris entre 0,3 m et 0,5 m, que la lame de scie (6).

10. Véhicule selon l'une des revendications 1 à 9,
**caractérisé en ce que**
la vis sans fin de transport (5) présente au moins deux diamètres différents, à savoir un diamètre plus petit à proximité de la lame de scie et un diamètre plus grand dans la zone supérieure.

11. Véhicule selon l'une des revendications 1 à 10,
**caractérisé en ce**
**qu'**un dispositif à rouleau (15) orienté horizontalement est disposé dans le sens de marche en aval de la vis sans fin de transport (5), lequel dispositif est constitué de préférence de deux rouleaux (16, 17) réglables l'un par rapport à l'autre et comprimant les végétaux à base de bois découpés, le dispositif à rouleau (15) étant disposé, vu dans le sens de marche, de préférence en aval du dispositif directeur (9).

12. Véhicule selon l'une des revendications 1 à 11,
**caractérisé en ce**
**qu'**un rouleau de transport (18) guidant les végétaux à base de bois découpés de préférence vers le dispositif à rouleau (15) est disposé sur l'extrémité, opposée au sol, de la vis sans fin de transport (5).

13. Véhicule selon l'une des revendications 1 à 12,
**caractérisé en ce que**
un châssis directeur (19) avec une extrémité libre (20) placée à l'avant du véhicule et une zone de glissement (21) est prévu au-dessus du dispositif de transport (2), l'extrémité (20) libre du châssis directeur (19) et la vis sans fin de transport (5) étant disposées de préférence respectivement sur un côté de la rangée et sur l'autre côté de la rangée dans le cas de végétaux à base de bois placés en rangée, la zone de glissement (21) étant conçue en guidant, en cas de déplacement vers l'avant du véhicule, des zones éloignées du sol des végétaux à base de bois d'un côté vers l'autre côté et pliant vers l'avant.

14. Véhicule selon l'une des revendications 1 à 13,
**caractérisé en ce que**
le dispositif de regroupement ou de hachage (3) est disposé sur le véhicule dans le sens de marche derrière le dispositif de transport (2).
